# EUROPEAN PATENT APPLICATION

(11) **EP 1 860 168 A2**
(43) Date of publication of application: **28.11.2007**
(21) Application number: 07010260.3
(22) Date of filing: 23.05.2007
(51) Int. Cl.: C09J 7/02

(54) **Pressure-sensitive adhesive sheet**

(30) Priority: 24.05.2006 JP 2006144498
(71) Applicant: NITTO DENKO CORPORATION, Osaka (JP)
(72) Inventor: Okawa, Yuji, Ibaraki-shi Osaka (JP)
(74) Representative: Grünecker, Kinkeldey, Stockmair & Schwanhäusser Anwaltssozietät

(57) **Abstract**

The present invention relates to a pressure-sensitive adhesive sheet, which includes a pressure-sensitive adhesive film including a base material layer and a pressure-sensitive adhesive layer disposed on at least one side of the base material layer, in which the base material layer includes a soft vinyl chloride resin and contains at least one compound selected from the group consisting of a fatty acid compound, an aliphatic metal salt and a phosphoric acid ester; and a release film including a liner base material and a release layer, in which a surface of the release layer in the release film has a surface free energy of 20 dyn/cm or more but less than 30 dyn/cm, in which the release film and the pressure-sensitive adhesive film are laminated in such a way that the release layer side of the release film is in contact with a surface of the pressure-sensitive adhesive layer. The pressure-sensitive adhesive sheet has a high expandability, shows no transfer of deposits from the base material onto an adherend and is useful as a sheet for holding semiconductor wafers, electronic parts and so on.

## Description

### FIELD OF THE INVENTION

The present invention relates to a pressure-sensitive adhesive sheet which is usable in processing (such as dicing, expanding, and picking up) products to be processed such as LED parts, electronic parts, semiconductor wafers, resin boards for sealing semiconductor devices, and glass wafers.

### BACKGROUND OF THE INVENTION

Pressure-sensitive adhesive sheets have been widely employed in manufacturing semiconductors and so on. As protective sheets to be used for protecting semiconductor wafers in the step of back grinding or supporting sheets to be used for supporting (fixing) wafers in the step of cutting (dicing) into elements chips, in particular, pressure-sensitive adhesive sheets including soft vinyl chloride as the base material are widely employed since they have high expandability and excellent pick up capability (see, for example, Patent Documents 1 and 2). From the viewpoints of handling properties and protecting pressure-sensitive adhesive layer, these pressure-sensitive adhesive sheets frequently have a release film attached thereto or a release layer formed on the back side of the pressure-sensitive adhesive layer thereof.

However, pressure-sensitive adhesive sheets employing a soft vinyl chloride as a base material suffer from the following problems. A soft vinyl chloride resin usually contains a compound having a relatively low molecular weight such as a plasticizer or a stabilizer, and such a compound would sometimes move and diffuse in the sheet and separate out on the surface of the pressure-sensitive adhesive layer as a deposit (i.e., the phenomenon called "migration"). When the pressure-sensitive adhesive sheet is attached to an article to be processed such as a semiconductor wafer and the pressure-sensitive adhesive sheet is peeled off after the completion of the processing, this deposit sticks to the article as the residue and causes some troubles in the manufacturing or worsens the qualities of the product (i.e., the phenomenon called "transfer contamination"). When a foreign matter sticks in a thickness of about 10 µm to a silicone wafer, for example, there arises a serious problem in the qualities of the product, i.e., worsening in the optical characteristics in the case of an LED part or a glass wafer or worsening in the electrical current characteristics and bonding properties in the case of an electronic part having an electrode on the surface to which the pressure-sensitive adhesive sheet is to be attached.

As a method for preventing the above-mentioned migration of a plasticizer contained in the base material toward the pressure-sensitive adhesive layer, it is known to construct a three-layered pressure-sensitive adhesive sheet having an intermediate layer made of polyolefin or a modified acrylic resin (see, for example, Patent Document 3). However, these resins constituting the intermediate layer are inferior in flexibility to the soft polyvinyl chloride resin. Accordingly, there still remains a problem that the expandability is lowered thereby.
Patent Document 1 : JP-A-2001-207140
Patent Document 2 : JP-A-2001-226647
Patent Document 3 : JP-B-1-56111

### SUMMARY OF THE INVENTION

An object of the invention is to prevent a deposition of a plasticizer or the like onto a surface of a pressure-sensitive adhesive layer of a pressure-sensitive adhesive sheet made of a vinyl chloride resin having a high expandability; and to provide a pressure-sensitive adhesive sheet which is usable in processing semiconductor wafers, and the like, while causing little transfer contamination.

To achieve the object as described above, the inventors conducted intensive studies. As a result, they have found out that the transfer of a fatty acid, an aliphatic metal salt, or the like toward an article to be processed can be prevented by controlling the surface of a release film being in contact with the pressure-sensitive adhesive layer surface of a pressure-sensitive film or the surface of a release layer formed on the opposite side to the pressure-sensitive adhesive layer side (back side) of a pressure-sensitive adhesive sheet to have a specific surface free energy without forming an intermediate layer for preventing the migration of a low-molecular weight compound, thereby completing the invention.

### BRIEF DESCRIPTION OF DRAWINGS

Fig. 1 is a schematic section view which shows an embodiment of the pressure-sensitive adhesive sheet (in the case of having a release film laminated thereon) according to the invention.
Fig. 2 is a schematic section view which shows another embodiment of the pressure-sensitive adhesive sheet (in the case of not having a release film) according to the invention.

### Description of the Reference Numerals

- 1: pressure-sensitive adhesive sheet
- 2: base material layer
- 3: pressure-sensitive adhesive layer
- 4: pressure-sensitive adhesive film
- 5: release layer
- 6: liner base material
- 7: release film
- 8: pressure-sensitive adhesive sheet
- 9: release layer
- 10: base material layer
- 11: pressure-sensitive adhesive layer

### DETAILED DESCRIPTION OF THE INVENTION

Namely, the present invention relates to the followings.
(1) A pressure-sensitive adhesive sheet, which comprises:
   a pressure-sensitive adhesive film including a base material layer and a pressure-sensitive adhesive layer disposed on at least one side of the base material layer, wherein the base material layer includes a soft vinyl chloride resin and contains at least one compound selected from the group consisting of a fatty acid compound, an aliphatic metal salt and a phosphoric acid ester; and
   a release film including a liner base material and a release layer, wherein a surface of the release layer in the release film has a surface free energy of 20 dyn/cm or more but less than 30 dyn/cm,
   wherein the release film and the pressure-sensitive adhesive film are laminated in such a way that the release layer side of the release film is in contact with a surface of the pressure-sensitive adhesive layer.
(2) A pressure-sensitive adhesive sheet, which comprises:
   a base material layer which includes a soft vinyl chloride resin and contains at least one compound selected from the group consisting of a fatty acid compound;
   a pressure-sensitive adhesive layer disposed on a surface of the base material layer; and
   a release layer disposed on the other surface of the base material layer,
   wherein a surface of the release layer has a surface free energy of 20 dyn/cm or more but less than 30 dyn/cm.
(3) The pressure-sensitive adhesive sheet according to (1) or (2), wherein the release layer contains a long-chain alkyl compound having a long-chain alkyl group having 10 or more carbon atoms.
(4) A pressure-sensitive adhesive sheet according to claim (3), wherein the long-chain alkyl compound is a product of a reaction between octadecyl isocyanate and polyvinyl alcohol or an ethylene-vinyl octadecyl carbide copolymer.
(5) A pressure-sensitive adhesive sheet according to any one of (1) to (4), which is to be used as a support in processing electronic parts.
(6) A pressure-sensitive adhesive sheet according to any one of (1) to (4), which is to be used as a support in processing glass wafers.

Since the pressure-sensitive adhesive sheet for holding wafers according to the invention has a high expandability, picking up can be easily executed and thus defective products can be reduced. Moreover, it is industrially advantageous because of causing little transfer contamination on chip surface and thus contributing to an increase in productivity.

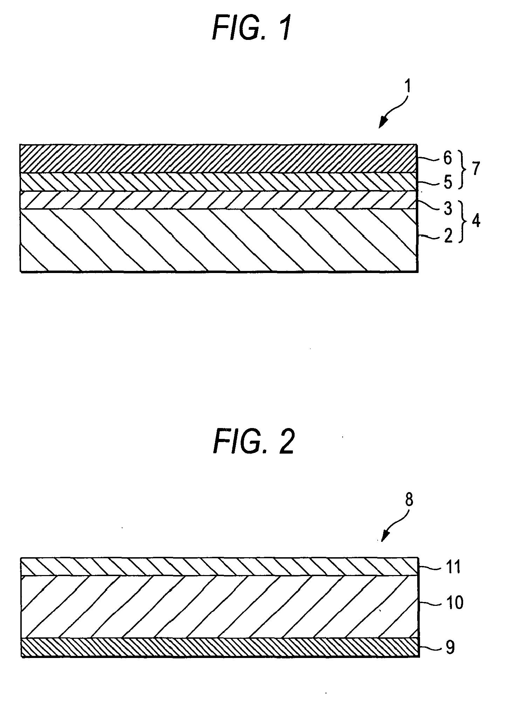

In the followings, embodiments for carrying out the invention will be described by reference to drawings. Fig. 1 is a schematic section view which shows one embodiment of the pressure-sensitive adhesive sheet according to the invention. In a pressure-sensitive adhesive sheet 1 shown in Fig. 1, a release film 7 is temporarily attached to a pressure-sensitive adhesive film 4. At the time of attaching to an adherend such as a semiconductor wafer, the pressure-sensitive adhesive sheet is used after peeling off the release film 7. The pressure-sensitive adhesive film 4 has a pressure-sensitive adhesive layer 3 formed on the surface of the base material layer 2 to which the release film 7 is to be attached. The release film 7 has a release layer 5 formed on at least one surface of a liner base material 6.

Fig. 2 shows another embodiment of the present invention. In a pressure-sensitive adhesive sheet 8 shown in Fig. 2, a pressure-sensitive adhesive layer 11 is formed on one surface of the base material layer 10, and a release layer 9 is formed on the other surface of the base material layer 10 which is opposite to the surface on which the pressure-sensitive adhesive layer 11 is formed.

As discussed above, the pressure-sensitive adhesive sheet according to the invention has a structure in which a release film having a release layer is laminated on (attached to) a pressure-sensitive adhesive film having a base material layer and a pressure-sensitive adhesive layer, or a structure which includes a base material layer, a pressure-sensitive adhesive layer and a release layer without attaching a release film thereto. In the case where neither a release layer nor a release film is provided, the advantage of the invention cannot be established. In the structure in which the release film is laminated, the matter having the release film attached thereto is called "a pressure-sensitive adhesive sheet" while one from which the release film has been peeled off is called "a pressure-sensitive adhesive film" for the purpose of distinction.

A sheet having the above-described structure in which the release film is laminated is favorable, since the pressure-sensitive adhesive surface can be protected from contamination or adhesion of foreign matters when it is once wound into a roll and then rewound for examining the appearance in the inspection process. When such a pressure-sensitive adhesive sheet is attached to an article to be processed, the release film is peeled off before attaching. In the case where rewinding for inspection is not performed, a structure without using a release film may be employed. In this case, however, a release layer should be formed on the back side of the pressure-sensitive adhesive layer to prevent the sticking of the front and back sides of the sheet and to facilitate the winding off of the sheet when the pressure-sensitive adhesive sheet is wound off from a roll.

In the invention, the base material layer is constituted of a soft polyvinyl chloride film. It is preferable to use a soft polyvinyl chloride resin as the base material layer, since a high expandability can be obtained so that picking up can be easily conducted. The soft polyvinyl chloride resin may be either a resin containing a plasticizer or a copolymer or a polymer alloy.

Preferable examples of the plasticizer include a phthalic acid ester, an adipic acid ester, a sebacic acid ester, other polyester plasticizers, an epoxy-based plasticizer such as epoxidized soybean oil and a trimet-based plasticizer. In the case of adding a plasticizer, although the amount thereof is not restricted, it is preferably added in an amount of from 1 to 55 parts by weight, more preferably from 3 to 45 parts by weight, based on 100 parts by weight of the polyvinyl chloride polymer employed in the base material layer. In the case where the plasticizer is added in an amount less than 1 part by weight, the polyvinyl chloride resin becomes hard and the expandability is lowered in some cases. In the case where the amount thereof exceeds 55 parts by weight, since the amount of the plasticizer is excessive, a large amount of a crosslinking agent bleeds out on the surface opposite to the pressure-sensitive adhesive layer side, whereby the crosslinking agent sticks to, for example, a transfer roll in the course of the manufacturing and processing to cause contamination of the process and the like.

Examples of the above-described phthalic acid ester include dibutyl phthalate (DBP), di-normal-octyl phthalate (DnOP), dinonyl phthalate (DNP), diiononyl phthalate (DINP), diisodecyl phthalate (DIDP), di-2-ethylhexyl phthalate (DEHP), diethyl phthalate (DEP), dicyclohexyl phthalate (DCHP), dipropyl phthalate (DprP), dihexyl phthalate (DHP), dipentyl phthalate (DPP) and butylbenzyl phthalate (BBP).

Examples of the above-described adipic acid ester include dioctyl adipate (DOA), diisononyl adipate (DINA), di-normal-alkyl adipates and dialkyl adipates. Examples of the above-described sebacic acid esters include dibutyl sebacate (DBS) and dioctyl sebacate (DOS).

Examples of the above-described copolymer include vinyl chloride copolymers such as urethane-vinyl chloride copolymer, ethylene-vinyl chloride copolymer, vinyl acetate-vinyl chloride copolymer and ethylene-vinyl acetate copolymer. Either one of these copolymers, a mixture of two or more thereof or a mixture thereof with another resin or elastomer may be used. Needless to say, the above-described copolymer includes a graft copolymer as well as a block copolymer and a random copolymer. The above-described mixtures include not only a mere blend but also an alloy having a chemical bond.

The base material layer of the invention may further contain other known additives as, for example, a stabilizer, an antioxidant, a lubricant or a processing aid, so long as the advantage of the invention is not deteriorated thereby.

The base material layer of the invention contains at least one compound selected from the group consisting of a fatty acid compound, an aliphatic metal salt and a phosphoric acid ester. Examples of the fatty acid compound as described above include a fatty acid, a fatty acid ester and a fatty acid amide. These compounds have been generally employed as a plasticizer, a stabilizer, a surfactant, a lubricant, a processing aid or the like.
Such a compound contained in the base material layer bleeds out onto the surface of the pressure-sensitive adhesive layer during storage and, in particular at a low temperature, forms a solid deposit. When the pressure-sensitive adhesive sheet is attached to a wafer and peeled therefrom, this deposit is frequently transferred to the wafer surface, thereby causing contamination. Since the invention aims at solving the problem of the transfer of such deposit, no practical advantage can be achieved by the invention unless the base material layer contains such component as described above.

Although the content of the plasticizer including at least one compound selected from the group consisting of a fatty acid compound, an aliphatic metal salt and a phosphoric acid ester as described above is not particularly restricted, the content thereof preferably ranges from 20 to 40 parts by weight based on 100 parts by weight of the polyvinyl chloride resin in the base material layer. The content of a stabilizer preferably ranges from 0.5 to 5 parts by weight. In the case where the content of the plasticizer or the stabilizer is less than the lower limit as defined above, only little effect can be obtained in some cases. In the case where the content thereof exceeds the upper limit, on the other hand, such an additive is liable to bleed out on the surface in some cases.

Although thickness of the base material layer of the invention is not particularly restricted, it is preferably from 50 to 250 µm, more preferably from 60 to 230 µm. In the case where the thickness is less than 50 µm, the whole pressure-sensitive adhesive sheet becomes less "elastic" and thus the wafer-holding power is lowered in the dicing step. As a result, the dicing processability is worsened or chipping occurs in some cases. From the viewpoints of transfer properties, handling properties, cost, etc., it is also undesirable that the thickness is more than 250 µm.

The breaking elongation of the film to be used as the base material layer of the invention is preferably from 150 to 500%, more preferably from 180 to 400%.

In the case that a pressure-sensitive adhesive sheet according to the invention has no release sheet, a release agent may be added to the base material layer. When a release agent is added to the base material layer, the release agent bleeds out on the surface and thus a layer of the release agent (release layer) is formed on the surface opposite to the pressure-sensitive adhesive layer side. In the case where the pressure-sensitive adhesive sheet according to the invention has no release sheet and it is intended to form a release layer, the release agent may be applied to the base material layer, as well as adding the release agent to the base material layer. In the case of adding the release agent to the base material layer, although the amount thereof to be added is not particularly restricted, it is preferably from 0.3 to 1.5 parts by weight based on 100 parts by weight of the polyvinyl chloride resin in the base material layer. In the case where the amount of the release agent is less than 0.3 part by weight, the release agent layer cannot be sufficiently formed on the surface and thus the releasing effect is lowered. In the case where the content thereof exceeds 1.5 parts by weight, it is sometimes observed that an excessive releasing effect is achieved and thus the surface free energy can be hardly controlled within the range as specified in the invention in some cases.

The kind of the release agent to be used in the invention is not restricted so long as it satisfies the requirement for surface free energy according to the invention. Namely, a conventional release agent may be used. Among all, a compound having a long-chain alkyl group carrying 10 or more carbon atoms may be mentioned as a preferable example thereof from the viewpoints of releasability and prevention of the bleeding out of a low-molecular weight compound from the pressure-sensitive adhesive. Specific examples thereof include synthetic waxes, for example, coal-based synthetic waxes such as montan wax, polyethylene waxes and fat-based synthetic waxes such as a fatty acid amide and a fatty acid ester and crosslinked polymers having a long-chain alkyl group. More specifically, there can be mentioned a product of a reaction between octadecyl isocyanate and polyvinyl alcohol, methylenebis stearic acid amide, ethylene-vinyl carbide copolymer and so on.

In the case where a release agent is to be mixed with vinyl chloride, it is particularly preferable to use a fatty acid ester, a fatty acid amide or the like as the release agent from the viewpoints of compatibility and releasability. In particular, methylenebis stearic acid amide and a mixture thereof (a mixture with a fatty acid amide, etc.) are preferred. In the case where a release agent is applied to the pressure-sensitive adhesive sheet or a release agent layer is formed on the pressure-sensitive adhesive film, it is preferable, for example, from the viewpoint of the ability to form a solvent-soluble layer, that the release agent is a polymer or a crosslinked compound. In particular, a product of a reaction between octadecyl isocyanate and polyvinyl alcohol and an ethylene-vinyl octadecyl carbide copolymer are preferred. A fluorinated release agent or a silicone-based release agent is not preferable since they have a low surface free energy.

As the resin to be used in the pressure-sensitive adhesive layer of the invention, conventional pressure-sensitive adhesives such as rubber-based, acrylic, silicone-based or vinyl ester-based pressure-sensitive adhesives may be used. Among all, it is preferable to use an acrylic pressure-sensitive adhesive.

Examples of the rubber-based pressure-sensitive adhesives include pressure-sensitive adhesives containing, as the base polymer, natural rubber or various synthetic rubbers (for example, polyisoprene rubber, styrene-butadiene (SB) rubber, styrene-isoprene (SI) rubber, styrene-isoprene-styrene block copolymer (SIS) rubber, styrene-butadiene-styrene block copolymer (SBS) rubber, styrene-ethylene-butylene-styrene block copolymer (SEBS) rubber, styrene-ethylene-propylene-styrene block copolymer (SEPS) rubber, styrene-ethylene-propylene block copolymer (SEP), regenerated rubber, butyl rubber, polyisobutylene and modified rubber products thereof).

An acrylic pressure-sensitive adhesive contains an alkyl acrylate and/or an alkyl methacrylate (hereinafter referred to as alkyl (meth)acrylate) as the principle constituting monomer. Although it may be a homopolymer composed of a single monomer component, it is usually a copolymer of two or more monomer components (that is called an alkyl (meth)acrylate copolymer). Such an alkyl (meth)acrylate copolymer may be either a copolymer composed of two or more alkyl (meth)acrylates exclusively as the monomer components or a copolymer composed of one or more alkyl (meth)acrylates together with other copolymerizable component(s). The acrylic pressure-sensitive adhesive may be a mixture of two or more different alkyl (meth)acrylate copolymers.

Examples of the alkyl (meth)acrylate monomer unit in the invention include acrylic acid and methacrylic acid esters of linear or branched alkyl group having 30 or less (in particular, from 4 to 18) carbon atoms such as a methyl group, an ethyl group, a propyl group, an isopropyl group, an n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, or a dodecyl group.

Examples of other copolymerizable monomer unit(s) include carboxyl group-containing monomers such as acrylic acid, methacrylic acid, carboxyethyl acrylate, carboxypentyl acrylate, itaconic acid, maleic acid, fumaric acid and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methylacrylate; sulfonate group-containing monomers such as styrenesulfonic acid, allylsulfonic acid, 2-(meth)acrylamide-2-methylpropanesulfonic acid, (meth)acrylamidepropanesulfonic acid, sulfopropyl (meth)acrylate and (meth)acryloyloxynaphthalenesulfonic acid; and phosphate group-containing monomers such as 2-hydroxyethylacryloyl phosphate. Moreover, vinyl acetate, styrene, acrylonitrile and the like may be mentioned. In the case of copolymerizing a polyfunctional monomer, examples of the polyfunctional monomer component include hexanediol (meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate. From the viewpoint of the pressure-sensitive adhesive properties, etc., it is preferable to use the polyfunctional monomer in an amount of 30% by weight or less based on the total monomer components.

The weight-average molecular weight of the acrylic resin to be used as the acrylic pressure-sensitive adhesive in the pressure-sensitive adhesive layer of the invention is preferably 200,000 or more, more preferably from 300,000 to 2,000,000 and more preferably from 500,000 to 1,500,000. From the viewpoint of exhibiting pressure-sensitive adhesiveness at room temperature (23°C), the glass transition temperature of the acrylic resin in the pressure-sensitive adhesive layer is preferably 0°C or lower, more preferably from -100 to -20°C.

The pressure-sensitive adhesive layer of the invention may be either a pressure-sensitive adhesive layer of the radiation polymerization type in which the pressure-sensitive adhesiveness thereof is lowered by radiation irradiation, or a pressure-sensitive adhesive layer of the heat polymerization type in which the pressure-sensitive adhesiveness thereof is lowered by heating. In general, a pressure-sensitive adhesive layer of the radiation polymerization type requires expandability in many cases. Therefore, the advantage of the invention can be more remarkably achieved in the case where the pressure-sensitive adhesive layer is a pressure-sensitive adhesive layer of the radiation-curing type.

In the case where the pressure-sensitive adhesive layer of the invention is a pressure-sensitive adhesive layer of the radiation polymerization type, it is preferable to add a radiation polymerizable compound to the pressure-sensitive adhesive layer. As the radiation polymerizable compound, use may be made of a low-molecular weight compound having at least two photopolymerizable carbon-carbon double bonds per molecule that is disclosed by, for example, JP-A-60-196956 and JP-A-60-223139. Examples of the radiation polymerizable compound include esters of (meth)acrylic acid with polyhydric alcohols such as trimethylolpropane tri (meth)acrylate, tetramethylolmethane tetra(meth)acrylate, pentaerythritol tri(meth)acrylate, pentaerythritol tetra(meth)acrylate, dipentaerythritol monohydroxypenta(meth)acrylate, dipentaerythritol hexa(meth)acrylate, 1,4-butylene glycol di(meth)acrylate, and 1,6-hexanediol di(meth)acrylate. It is also possible to use an ester acrylate oligomer, isocyanurate or isocyanurate compounds such as 2-propenyl-3-butenyl cyanurate and tris(2-methacryloxyethyl) isocyanurate and an urethane acrylate-based oligomer. Among all, use of an urethane acrylate-based oligomer having a weight-average molecular weight of from 100 to 40000 (preferably from 200 to 30000) makes it possible to considerably improve the performance of preventing transfer contamination and remarkably reduce the sticking of the pressure-sensitive adhesiveness to the chip surface in the picking up step. Either one of these radiation polymerizable compounds or a mixture of two or more thereof may be used. Although the amount of the radiation polymerizable compound is not particularly restricted, from the viewpoint of re-releasability (picking up performance) after the radiation irradiation, it is preferable to add the radiation polymerizable compound in an amount of from 30 to 75% by weight, more preferably from 40 to 70% by weight, based on the total pressure-sensitive adhesive layer.

In the pressure-sensitive adhesive layer, as a base polymer, an acrylic resin having a carbon-carbon double bond in the side chain, midway of the main chain or at the terminus of the main chain may be used as a substitute for the radiation polymerizable compound as described above or in addition thereto. For example, an alkyl (meth)acrylate copolymer having a carbon-carbon double bond in its molecule can be obtained by introducing a carbon-carbon double bond into an alkyl (meth)acrylate copolymer as described above. Although this compound can be prepared by various known methods, it is preferable from the viewpoint of easiness in molecular design to employ a method which includes preliminarily copolymerizing a polymer with a monomer having a functional group, and then conducting an addition reaction with a monomer, which has another functional group capable of reacting with the above-described functional group and a carbon-carbon double bond, while maintaining the carbon-carbon double bond. Examples of the combination of the functional group in the acrylic polymer with the functional group in the monomer having the carbon-carbon double bond include a carbonate group with an epoxy group or an aziridyl group, and a hydroxyl group with an isocyanate group, and so on. Among all, a combination of a hydroxyl group as the functional group in the acrylic polymer with an isocyanate group as the functional group in the monomer is particularly preferable, since the reaction can be easily followed in this case. Examples of the isocyanate compound having a carbon-carbon double bond include methacryloyloxy isocyanate and 2-methacryloyloxyethyl isocyanate. Examples of the acrylic polymer include polymers carrying, as a monomer unit, 2-hydroxyethyl (meth)acrylate, 2-hydroxypropyl (meth)acrylate, 4-hydroxybutyl (meth)acrylate, 6-hydroxyhexyl (meth)acrylate, 2-hydroxyethyl vinyl ether, 4-hydroxybutyl vinyl ether, diethylene glycol monovinyl ether and so on. In the case where the acrylic resin has the carbon-carbon double bond in a side chain, it is preferable that 1% or more, preferably 3% or more, of side chains have the carbon-carbon double bond based on the total side chains. When the ratio of side chains having the carbon-carbon double bond is less than 1% based on the total side chains, only little effect can be established by introducing the carbon-carbon double bond into the side chains.

In the case where the pressure-sensitive adhesive layer of the invention is a radiation polymerizable pressure-sensitive adhesive layer, the pressure-sensitive adhesive layer contains a photopolymerization initiator. Examples of the photopolymerization initiator include benzoin alkyl ethers such as benzoin methyl ether, benzoin propyl ether, benzoin isopropyl ether and benzoin isobutyl ether; aromatic ketones such as benzyl, benzoin, benzophenone and α-hydroxycyclohexyl phenyl ketone; aromatic ketals such as benzyl dimethyl ketal; and thioxanthones such as polyvinyl benzophenone, chlorothioxanthone, dodecyl thioxanthone, dimethyl thioxanthone and diethyl thioxantone. Although the photopolymerization initiator may be added in an arbitrary amount without restriction, it is added preferably in an amount of from 0.1 to 12 parts by weight, more preferably from 0.5 to 10 parts by weight, based on 100 parts by weight of the acrylic resin constituting the pressure-sensitive adhesive layer. When the content of the photopolymerization initiator is less than 0.1 part by weight, the re-releasability due to radiation irradiation becomes insufficient in some cases. When the content thereof exceeds 12 parts by weight, the photopolymerization initiator sometimes bleeds out on the pressure-sensitive adhesive layer surface and causes transfer contamination of semiconductor wafers.

If necessary, the pressure-sensitive adhesive layer of the invention may further contain various conventional additives such as a tackifier, an antioxidant, a filler, and a colorant, so long as the advantage of the invention is not deteriorated thereby.

The thickness of the pressure-sensitive adhesive layer of the invention is preferably from 5 to 20 µm, more preferably from 5 to 15 µm. In the case where the thickness exceeds 20 µm, the aggregation power of the adhesive is sometimes lowered. In the case where the pressure-sensitive adhesive layer thickness is less than 5 µm, an even pressure-sensitive adhesive layer can be hardly formed or the adhesiveness becomes unstable, which sometimes causes deterioration in the characteristics.

In the case of forming a release layer in the pressure-sensitive adhesive sheet according to the invention, the release layer may be formed by adding a release agent to the base material film or applying the release agent thereto. As the release agent, use may be made of the above-described compounds. In this case, the release agent can be applied in the form of a dispersion or solution in an organic solvent. Application may be made of by a known method, for example, the gravure method, the fountain method, the air knife method, the reverse roll method, the dipping method, the calender method or the kiss coating method.

In the case where the pressure-sensitive adhesive sheet according to the invention has a release film, the release film has a layered structure in which a release layer is formed on at least one side of a liner base material. Examples of the liner base material to be used in the release film is not particularly restricted, and it include films made of synthetic resins such as polyethylene, polypropylene and polyethylene terephthalate. The release layer is the same as described above.

If necessary, the release film in the invention may be subjected to a UV blocking treatment to prevent the pressure-sensitive adhesive layer from the reaction with environmental UV light.

Although the thickness of the release film in the invention is not particularly restricted, it is preferably from 12 to 75 µm, more preferably from 25 to 50 µm. In the case where the thickness of the release film exceeds 75 µm, the film sometimes becomes highly rigid and can be hardly handled. In the case where the thickness is less than 12 µm, the film sometimes wrinkles because of being too thin.

In the case where the pressure-sensitive adhesive film according to the invention has a release film, the surface free energy of the surface of the release film which is to be attached to the pressure-sensitive adhesive layer (i.e., the release layer surface) is 20 dyn/cm or more but less than 30 dyn/cm, preferably 20 dyn/cm or more but less than 25 dyn/cm. In the case where the pressure-sensitive adhesive film has no release film, the surface free energy of the surface of the pressure-sensitive adhesive sheet opposite to the surface on which the pressure-sensitive adhesive layer is formed (i.e., the release layer surface) is 20 dyn/cm or more but less than 30 dyn/cm, preferably 20 dyn/cm or more but less than 25 dyn/cm. In the case where the surface free energy is less than 20 dyn/cm, a fatty acid and the like, contained in the base material layer, deposit on the surface of the pressure-sensitive adhesive layer when the pressure-sensitive adhesive sheet is stored in an environment at 15°C or lower. As a result, the deposit transfers onto the surface of an adherend such as a semiconductor wafer in the step of attaching the pressure-sensitive adhesive sheet and peeling it, and thus the adherend is contaminated. In the case where the surface free energy is more than 30 dyn/cm, the peeling force becomes large in the step of peeling the release film from the pressure-sensitive adhesive layer (the step of winding off from a roll in the case of forming no release film) and thus the winding tension of the pressure-sensitive adhesive sheet or the release film is enlarged. In this case, furthermore, the pressure-sensitive adhesive sheet suffers from breakage or peel-off of the pressure-sensitive adhesive layer and thus the workability and productivity are lowered.

The present invention has a characteristic that the surface free energy of the release layer surface is controlled within a specific range. Now, a pressure-sensitive adhesive sheet having a release film will be illustrated by way of example. Since this release film has a high surface free energy, there is a high energy barrier in depositing a fatty acid or the like to the interface between the release film and a pressure-sensitive adhesive layer (i.e., there is a high energy barrier in forming a new interface). Thus, the fatty acid or the like diffusing in the pressure-sensitive adhesive sheet can hardly come close to the interface with the release film so that a deposit is formed in only a small amount. When the surface free energy of a conventional release film is controlled to 20 dyn/cm or more, the work of release (=peeling force) from the pressure-sensitive adhesive layer is enlarged and thus the release film can be hardly peeled off. In the invention, therefore, a releasing agent having a high affinity for a plasticizer in the vinyl chloride base material is employed to thereby achieve a easy releasability. Accordingly, it becomes possible to impart excellent releasability even though the surface free energy is relatively high.

In the case where no release film is used, since the pressure-sensitive adhesive layer becomes in contact with the release layer when the pressure-sensitive adhesive sheet is wound for storage, a similar effect can be achieved.

The peeling force (180° peel: determined in accordance with JIS K 6854) between the pressure-sensitive adhesive film and the release film (between the pressure-sensitive adhesive layer surface and the release layer surface in the case of using no release film) of the pressure-sensitive adhesive sheet according to the invention is preferably from 0 to 1.0 (N/50 mm), more preferably from 0 to 0.9 (N/50 mm). In the case where the peeling force exceeds 1 (N/50 mm), there arises a large force in winding off the pressure-sensitive adhesive sheet while peeling the release film (or in stripping the front and back sides of the pressure-sensitive adhesive layer and the release layer), which sometimes results in deterioration in the workability.

The shape of the pressure-sensitive adhesive sheet according to the invention may be appropriately determined depending on the purpose of use without restriction. For example, it may be a tape, a label or the like. It is also possible to preliminarily cut and process the pressure-sensitive adhesive sheet into the same shape as a dicing ring.

The pressure-sensitive adhesive sheet according to the invention is to be used for holding and reinforcing wafers in processing semiconductor wafers. It is particularly preferable to use the pressure-sensitive adhesive sheet as a wafer-holding sheet in the dicing step.

Next, an method for producing the pressure-sensitive adhesive sheet of the invention will by illustrated by way of example, though the production method is not restricted thereto.

### Base material layer

A polyvinyl chloride film to be used as the base material layer of the invention can be produced by using a polyvinyl chloride resin which has been polymerized by an existing polymerization method such as the ethylene dechlorination method or the oxychlorination method. If necessary, the polyvinyl chloride resin may be kneaded together with a plasticizer, a stabilizer, a lubricant, or the like in a Banbury mixer or a mixing roll or with the use of a uniaxial or biaxial extruder to give a polymer. The polymer can be shaped into a sheet by using, for example, the calender method, the T-die method, the tube method or the like. After slitting into a required size, the remainder of the sheet can be recycled into the calender roll. However, there is a risk that the decomposed stabilizer might cause contamination. Thus, it is preferable that the blending ratio (the recovery ratio) of the recycled polymer is from 0 to about 5%.

### Pressure-sensitive adhesive layer

In the invention, the pressure-sensitive adhesive layer can be formed by directly coating a pressure-sensitive adhesive composition on the intermediate layer or by using the transfer method as described above. In the case where the pressure-sensitive adhesive layer includes a radiation polymerizable acrylic pressure-sensitive adhesive, for example, the pressure-sensitive adhesive composition can be produced in accordance with a conventional polymerization method such as the solution polymerization method, the block polymerization method or the emulsion polymerization method. From the viewpoint of easiness in coating the film, for example, use may be made of solution polymerization method. Similar to the case as discussed above, a pressure-sensitive adhesive composition solution can be obtained by dissolving definite amounts of a main monomer component and a copolymerizable monomer component in a solvent such as toluene and copolymerizing these monomer components and, then optionally adding a radiation polymerizable compound, a crosslinking agent and a photopolymerization initiator. Subsequently, the pressure-sensitive adhesive layer is formed by the direct coating method or the transfer method to give a pressure-sensitive adhesive film. It is also possible that a pressure-sensitive adhesive layer is formed on the release film and attached to the surface of the base material layer to thereby directly obtain a pressure-sensitive adhesive sheet having the release film.

### Release film

The liner base material to be used in the release film of the invention can be produced by a conventional production method. Additionally, it is also possible to use a marketed polyethylene terephthalate film or the like. A release agent is dissolved or dispersed in an organic solvent and the coating solution thus prepared is applied to the liner base material as described above by a conventional coating method. Thus, a release film is obtained. Subsequently, the release film thus obtained is attached to a pressure-sensitive adhesive film to obtain a pressure-sensitive adhesive sheet.

### Methods of measuring physical properties and methods of evaluating effects

Next, measurement methods and evaluation methods to be used in the invention will be illustrated as follows.

### (1) Surface free energy (measurement of contact angle)

The release film before attaching to the pressure-sensitive adhesive layer was employed as a test sample (in the case where no release film was used, the pressure-sensitive adhesive sheet before the lamination of the release layer on the pressure-sensitive adhesive layer was employed as a test sample). Using the surface to be attached to the pressure-sensitive adhesive layer (the release layer side) as the measurement surface, the contact angles to pure water, methylene iodide, α-bromonaphthaline, hexadecane and ethylene glycol were measured. Then, the surface free energy was calculated in accordance with Young-Dupre equation (Wa = γL(1 + cosθ), in which Wa is work of adhesion, and γL is surface free energy of a liquid).

The measurement conditions were as follows.

Device : contact angle meter (CA-X manufactured by FACE)

Atmosphere : 23°C, 50%RH

Number of repetitions : 5 times per sample (The average value is employed.)

### (2) Peeling force

In each of the pressure-sensitive adhesive sheets having a release film (Example 1 and Comparative Examples 1 and 2), the release film and the pressure-sensitive adhesive film were referred to as respective ends, a 180°C peel test (in accordance with JIS Z 0237) was conducted and the peeling force (the peeling force between the pressure-sensitive adhesive layer side of the pressure-sensitive adhesive film and the release layer side of the release film) was measured.

In each of the pressure-sensitive adhesive sheets having no release film (Examples 3 and 4), a sample was collected in the state where the pressure-sensitive adhesive layer side of the pressure-sensitive adhesive tape was attached to the release layer side, and the peeling force (the peeling force between the front and back sides of the pressure-sensitive adhesive sheet) was measured under the same conditions.

Device : RTC-1150A manufactured by Orientec

Sample width : 50 mm

Tensile speed : 300 mm/min

Environmental temperature and humidity : 23°C, 50%RH

Number of repetitions : n = 5

### (3) Transfer to adherend

Each of the pressure-sensitive adhesive tapes (rolled) obtained in Examples and Comparative Examples was stored at 5°C for 24 hours to give a sample. Similarly, the adherend (silicone wafers were employed in Examples and Comparative Examples) was kept at 5°C.

In an environment at 5°C, a pressure-sensitive adhesive sheet (or pressure-sensitive adhesive film) sample cut into a width of 20 mm (after peeling the release film in the case of having the release film) was attached to the adherend by using a attaching roller. Immediately after the attaching, the pressure-sensitive adhesive sheet was peeled off and the sample surface (the side to which the pressure-sensitive adhesive sheet had been attached) was observed under a stereoscopic microscope (50 x magnification) (the area observed: 100 mm²). Each sample was observed in five viewing fields. A sample showing few transferred matters was evaluated as having good transfer-preventing properties (referred to as A), while one showing much transferred matters was evaluated as having poor transfer-preventing properties (referred to as B).

For example, transfer matters of about several µm or larger were counted per viewing field. A sample showing less than 10 transferred matters can be evaluated as having good transfer contamination-preventing properties (referred to as A), while one showing 10 or more transferred matters can be evaluated as having poor transfer contamination-preventing properties (referred to as B).

### Examples

Next, the present invention will be described in greater detail by reference to the following Examples. However, the invention is not restricted thereto.

### Example 1

### (Base material layer)

A soft vinyl chloride base material (thickness: 70 µm) containing 4% of additives such as a stabilizer including zinc stearate and so on and 26% of dioctyl phthalate (DOP) was shaped into a film by the calender method. After slitting, a 10% portion in the width direction of the film was returned (recovered) into the calender and film formation was continued. A product obtained after producing the film in a length of 5000 m or longer after the initiation of the film formation was employed.

### (Pressure-sensitive adhesive layer)

90 parts by weight of butyl acrylate was copolymerized with 10 parts by weight of acrylic acid nitrile by a commonly employed method to give an acrylic polymer having a weight-average molecular weight of 700,000. To 100 parts by weight of this polymer, 30 parts by weight of dioctyl phthalate and 2 parts by weight of a melamine-based crosslinking agent (Superbeckamin™ manufactured by Dainippon Ink & Chemicals Inc.) were added to give a pressure-sensitive adhesive. Then, it was cast on the base material layer as described above to give a thickness of 10 µm. Thus, a pressure-sensitive adhesive film was obtained.

### (Release film)

By using a polyethylene terephthalate film (Lumilar S-105 manufactured by Toray Industries, Inc.), a solution of octadecyl isocyanate-polyvinyl alcohol copolymer (copolymerization ratio:50/50) in toluene was coated on the surface to be in contact with the pressure-sensitive adhesive layer to obtain a release film (coating thickness: 40 nm). As Table 1 shows, the surface free energy of the surface of this release film which is to be in contact with the pressure-sensitive adhesive layer was 21 dyn/cm.

### (Pressure-sensitive adhesive sheet)

The release film obtained above was attached to the surface of the pressure-sensitive adhesive layer in the pressure-sensitive adhesive film by using a roller to obtain a pressure-sensitive adhesive sheet.

The pressure-sensitive adhesive sheet thus obtained showed no deposition or transfer onto the adherend. As Table 1 shows, therefore, it was an excellent pressure-sensitive adhesive sheet showing a favorable releasability with scarce transfer. By using a mounter (M-265 manufactured by Nitto Denko Corporation), the pressure-sensitive adhesive sheet was attached to the adherend while peeling off the release film. As a result, the release film could be smoothly peeled off and the pressure-sensitive adhesive sheet well attached to the adherend.

### Example 2

A pressure-sensitive adhesive film was obtained as in Example 1 but using no release film and applying an octadecyl isocyanate-polyvinyl alcohol copolymer to the back side of the pressure-sensitive adhesive film which is opposite to the pressure-sensitive adhesive layer side with the use of a solvent mixture containing toluene and methyl ethyl ketone (MEK) and using a kiss coater to form a release layer (thickness: 50 nm). Thus, a pressure-sensitive adhesive sheet was formed. As Table 1 shows, the surface free energy of the surface of the release layer in this pressure-sensitive adhesive sheet was 24 dyn/cm.

The pressure-sensitive adhesive sheet thus obtained showed no deposition or transfer onto the adherend. As Table 1 shows, therefore, it was an excellent pressure-sensitive adhesive sheet showing a favorable releasability with scarce transfer. As in Example 1, the pressure-sensitive adhesive sheet was attached to the adherend. As a result, the release layer surface could be smoothly peeled off and the pressure-sensitive adhesive sheet well attached to the adherend.

### Example 3

A pressure-sensitive adhesive film (a pressure-sensitive adhesive sheet) was produced as in Example 1 but adding 0.6 part by weight of methylenebis stearic acid amide (methylenebis stearyl amide) as a release agent to the base material layer material. Although the release agent was not applied, the methylenebis stearic acid amide bled out onto the surface of the base material layer which is opposite to the pressure-sensitive adhesive layer side to thereby form a release layer. No release film was employed. As Table 1 shows, the surface free energy of the surface of the release layer in this pressure-sensitive adhesive sheet was 29 dyn/cm.

The pressure-sensitive adhesive sheet thus obtained showed no deposition or transfer onto the adherend. As Table 1 shows, therefore, it was an excellent pressure-sensitive adhesive sheet showing a favorable releasability with scarce transfer. As in Example 1, the pressure-sensitive adhesive sheet was attached to the adherend. As a result, the release layer surface could be smoothly peeled off and the pressure-sensitive adhesive sheet well attached to the adherend.

### Comparative Example 1

To the pressure-sensitive adhesive layer surface of the pressure-sensitive adhesive sheet obtained in Example 3, a polyethylene terephthalate film having a release layer including polydimethylsiloxane was attached as a release film. As Table 1 shows, the surface free energy of the surface of this release film which is to be in contact with the pressure-sensitive adhesive layer was 19 dyn/cm.

As Table 1 shows, the pressure-sensitive adhesive sheet thus obtained showed transfer of deposits onto the adherend. Thus, it was inferior in the properties of preventing transfer. The deposits were a crystalline compound of fatty acid amide and another crystalline compound containing a stearic acid component. When it was tested by using a mounter (M-265 manufactured by Nitto Denko Corporation), a high releasability of the release film and favorable adhesion to the adherend were obtained. The release film could be smoothly peeled off and the pressure-sensitive adhesive sheet well attached to the adherend.

### Comparative Example 2

To the pressure-sensitive adhesive layer surface of the pressure-sensitive adhesive sheet obtained in Example 3, a polyethylene film (manufactured by Okura Industrial Co., Ltd., thickness: 70 µm) was attached as a release film. As Table 1 shows, the surface free energy of the surface of this release film which is to be in contact with the pressure-sensitive adhesive layer was 36 dyn/cm.

As Table 1 shows, the pressure-sensitive adhesive sheet thus obtained showed no transfer of deposits onto the adherend. However, it showed a large peeling force. When the pressure-sensitive adhesive sheet was attached to the adherend while peeling off the release film with the use of a mounter (M-265 manufactured by Nitto Denko Corporation), the release film could not be smoothly peeled off from the adherend and the adhesion to the adherend was poor.

The results of Examples and Comparative Examples as described above indicate that the transfer of matters (a plasticizer and a stabilizer) having migrated from a soft vinyl chloride base material layer to an adherend can be prevented by controlling the surface free energy of the release layer within the range as specified in the present invention.

**Table 1**

| | Release agent | Surface free energy (dyn/cm) | Peeling force (N/50 mm) | Transfer to adherend |
|---|---|---|---|---|
| Example 1 | Octadecyl isocyanate-polyvinyl alcohol copolymer | 21 | 0.8 | A |
| Example 2 | Octadecyl isocyanate-polyvinyl alcohol copolymer | 24 | 0.9 | A |
| Example 3 | Methylenebis stearic acid amide | 29 | 0.6 | A |
| Comparative Example 1 | Polydimethylsiloxane | 19 | 0.08 | B |
| Comparative Example 2 | None (polyethylene) | 36 | 2 | A |

While the present invention has been described in detail and with reference to specific embodiments thereof, it will be apparent to one skilled in the art that various changes and modifications can be made therein without departing from the scope thereof.

This application is based on Japanese patent application No. 2006-144498 filed May 24, 2006, the entire contents thereof being hereby incorporated by reference.

Further, all references cited herein are incorporated in their entireties.

## Claims

1. A pressure-sensitive adhesive sheet, which comprises:
a pressure-sensitive adhesive film including a base material layer and a pressure-sensitive adhesive layer disposed on at least one side of the base material layer, wherein the base material layer includes a soft vinyl chloride resin and contains at least one compound selected from the group consisting of a fatty acid compound, an aliphatic metal salt and a phosphoric acid ester; and
a release film including a liner base material and a release layer, wherein a surface of the release layer in the release film has a surface free energy of 20 dyn/cm or more but less than 30 dyn/cm,
wherein the release film and the pressure-sensitive adhesive film are laminated in such a way that the release layer side of the release film is in contact with a surface of the pressure-sensitive adhesive layer.

2. A pressure-sensitive adhesive sheet, which comprises:
a base material layer which includes a soft vinyl chloride resin and contains at least one compound selected from the group consisting of a fatty acid compound;
a pressure-sensitive adhesive layer disposed on a surface of the base material layer; and
a release layer disposed on the other surface of the base material layer,
wherein a surface of the release layer has a surface free energy of 20 dyn/cm or more but less than 30 dyn/cm.

3. The pressure-sensitive adhesive sheet according to claim 1, wherein the release layer contains a long-chain alkyl compound having a long-chain alkyl group having 10 or more carbon atoms.

4. The pressure-sensitive adhesive sheet according to claim 2, wherein the release layer contains a long-chain alkyl compound having a long-chain alkyl group having 10 or more carbon atoms.

5. A pressure-sensitive adhesive sheet according to claim 3, wherein the long-chain alkyl compound is a product of a reaction between octadecyl isocyanate and polyvinyl alcohol or an ethylene-vinyl octadecyl carbide copolymer.

6. A pressure-sensitive adhesive sheet according to claim 4, wherein the long-chain alkyl compound is a product of a reaction between octadecyl isocyanate and polyvinyl alcohol or an ethylene-vinyl octadecyl carbide copolymer.

7. A pressure-sensitive adhesive sheet according to claim 1, which is to be used as a support in processing electronic parts.

8. A pressure-sensitive adhesive sheet according to claim 2, which is to be used as a support in processing electronic parts.

9. A pressure-sensitive adhesive sheet according to claim 1, which is to be used as a support in processing glass wafers.

10. A pressure-sensitive adhesive sheet according to claim 2, which is to be used as a support in processing glass wafers.
